# EUROPÄISCHE PATENTSCHRIFT

(11) **EP 1 536 196 B1**
(45) Veröffentlichungstag und Bekanntmachung des Hinweises auf die Patenterteilung: **27.11.2013**
(21) Anmeldenummer: 04013244.1
(22) Anmeldetag: 04.06.2004
(51) Int. Cl.: F25D 3/08, A47J 47/10, A45C 11/20

(54) **Behälter aus Kunststoff**
Plastic container
Récipient en matière plastique

(30) Priorität: 26.11.2003 DE 20318471 U
(43) Veröffentlichungstag der Anmeldung: 01.06.2005
(73) Patentinhaber: Rotho Kunststoff AG, 5303 Würenlingen (CH)
(72) Erfinder: Olf, Peter, 79761 Waldshut-Tiengen (DE)
(74) Vertreter: Lemcke, Brommer & Partner

(56) Entgegenhaltungen:
- EP-A- 0 765 819
- DE-A1- 2 925 499
- US-A- 3 307 603
- US-A- 3 710 589
- US-A- 4 982 722
- US-A- 5 307 647
- US-A- 5 701 757

## Beschreibung

Die vorliegende Erfindung betrifft einen Behälter aus Kunststoff, insbesondere für Lebensmittel, mit einem plattenförmig ausgebildeten Grundkörper, einem Deckel sowie einem am Grundkörper angeordneten Zusatzfach mit einem darin enthaltenen Kühlelement nach dem Oberbegriff des Anspruchs 1.

Insbesondere zum Mitführen von Proviant werden durch einen Deckel verschließbare Kunststoffbehälter wegen ihres geringen Gewichtes und ihrer leichten Reinigbarkeit weit verbreitet verwendet. Allerdings sind gerade Lebensmittel zum einen empfindlich gegen übergroße Wärmeeinwirkung, und zum anderen ist es auch für den Benutzer meist angenehmer, wenn der mitgeführte Proviant etwas kühler als die Umgebungstemperatur ist.

Um Lebensmittel in einem Kunststoffbehälter länger kühl zu halten, werden sogenannte Kälteakkus verwendet, die aus einem allseitig geschlossenen Gehäuse mit einem Kühlmedium hoher Wärmekapazität bestehen und vor der Benutzung beispielsweise im Gefrierschrank mit Kälte "aufgeladen" werden können. Solche Kälteakkus werden einfach mit dem zu kühlenden Gut in den Behälter eingelegt. Dies ist allerdings unbefriedigend, da die Kälteakkus nicht fixiert sind und durch ihr relativ hohes Gewicht beim Transport des Behälters Schäden am zu kühlenden Gut verursachen können. Desweiteren ist der direkte Kontakt der Kälteakkus mit Lebensmitteln bei diesem besonders bevorzugten Verwendungszweck aus hygienischen Gründen und wegen der Gefahr von Kältebrand unerwünscht.

In der DE 198 52 813 A1 ist daher vorgeschlagen worden, einen Kunststoffbehälter in seinem Inneren mit einem Zusatzfach zu versehen, welches den Kälteakku aufnimmt und ihn so zum einen fixiert und zum anderen von dem zu kühlenden Gut, insbesondere Lebensmitteln, separiert.

Wenn der aus der DE 198 52 813 A1 bekannte Behälter allerdings für andere Zwecke verwendet werden soll, oder wenn beispielsweise in der kalten Jahreszeit auf eine Kühlung verzichtet werden kann, ist das Zusatzfach für den Kälteakku im Innenraum des Behälters störend, da er den Behälterinnenraum verkleinert und gegebenenfalls sogar unterteilt.

In der US 5,701,757 ist ein Behälter der eingangs genannten Art offenbart. Dieser Behälter behält die Vorteile eines separaten Zusatzfachs für ein Kühlelement bei und ist dementsprechend mit einem solchen versehen, jedoch wird dieses Zusatzfach durch einen separaten, wannenförmigen Zusatzbehälter gebildet, der unter dem Boden des Grundkörpers mittels außen am Grundkörper angeordneten Rastelementen lösbar an diesem angebracht werden kann und ein entweder fest oder entnehmbar eingelegtes Kühlelement beinhaltet.

Dadurch, dass der Zusatzbehälter mit dem Kühlelement von außen auf den Grundkörper des erfindungsgemäßen Behälters aufgesetzt und verrastet wird, wird der für das zu transportierende oder aufzubewahrende bzw. zu servierende Gut vorgesehene Innenraum bzw. die Platte des Behälters in keiner Weise beeinträchtigt oder zergliedert. Auch die Handhabung des Behälters wird durch den Zusatzbehälter in keiner Hinsicht erschwert. Auch in der DE 29 25 499 A1 und der US 3,710,589 sind ähnliche Behälter offenbart.

Der vorliegenden Erfindung liegt die Aufgabe zugrunde, einen Behälter der eingangs genannten Art hinsichtlich seiner universellen Verwendbarkeit und einfachen Handhabbarkeit zu verbessern.

Diese Aufgabe ist durch einen Behälter mit den Merkmalen des Patentanspruchs 1 gelöst.

Bevorzugte Weiterbildungen und Ausgestaltungen der Erfindung sind in den Patentansprüchen 2 bis 7 niedergelegt.

Aufgrund seiner speziellen Ausgestaltung, wie sie im kennzeichnenden Teil des Anspruchs 1 definiert ist, ist der erfindungsgemäße Behälter gleichermaßen mit und ohne Kühlelement nutzbar. Ist eine Kühlung des Behälterinhalts nicht notwendig, kann der Zusatzbehälter mit dem Kühlelement einfach weg gelassen werden. Auch zu Reinigungszwecken ist es möglich, den Zusatzbehälter zu entfernen; denn dieser wird in der Regel nicht verschmutzt sein, wohingegen der restliche Behälter dann ganz normal gereinigt werden kann, beispielsweise in einer Haushaltsspülmaschine, ohne auf das Kühlelement Rücksicht nehmen zu müssen.

Besondere Vorteile ergeben sich, wenn das Kühlelement nicht fest im Zusatzbehälter angeordnet, sondern entnehmbar eingelegt ist und beispielsweise in Form eines handelsüblichen Gelkissens vorliegt. Ein solches Gelkissen kann dann separat im Gefrierschrank "aufgeladen" werden, was die Wärmeabgabe im Gefrierschrank beschleunigt und Platz spart. Darüber hinaus können zwei oder mehr Gelkissen Verwendung finden, so dass bei Bedarf ein bereits warm gewordenes Gelkissen durch ein frisch gekühltes Gelkissen ausgetauscht werden kann.

Die erfindungsgemäße Anordnung des Kühlelements unterhalb des Bodens des Grundkörpers bewirkt eine effiziente Wärmeübertragung vom Behälterinhalt zum Kühlelement, da das zu kühlende Gut im Behälter in aller Regel auf dem Boden aufliegt und umgekehrt das Kühlelement vorzugsweise Kontakt mit dem Boden des Grundkörpers erhält, so dass ein direkter Wärmeübergang durch den Boden des Grundkörpers hindurch stattfindet. Auf der anderen Seite kann die Bodenfläche des Zusatzbehälters strukturiert ausgebildet sein, und zwar dergestalt, dass das Kühlelement nicht flächig auf der Bodenfläche aufliegt, sondern im Idealfall nur punktuell unterstützt wird. Hierdurch ergibt sich ein nur von den Auflagepunkten unterbrochenes Luftpolster zwischen dem Kühlelement und der Bodenfläche des Zusatzbehälters, was die unerwünschte Wärmeübertragung von der Umgebung des Behälters in das Kühlelement wirkungsvoll verringert.

Eine weitere Verringerung dieser Wärmeübertragung ergibt sich dadurch, dass an der Unterseite des Zusatzbehälters ein umlaufender Stellrand vorgesehen ist; hierdurch kann eine direkte Wärmeübertragung von der unter dem Behälter befindlichen Aufstellfläche in das Kühlelement weiter reduziert werden. Ein umlaufender Stellrand verhindert darüber hinaus einen Luftstrom entlang der Unterseite des Zusatzbehälters und bildet stattdessen ein Luftpolster, welches zusätzlich isolierend wirkt.

Der erfindungsgemäße Behälter kann als Butterdose oder Käseglocke ausgestaltet sein, da er mit einem plattenförmigen Grundkörper und einem haubenförmigen Deckel versehen ist, welche vorzugsweise mittels lösbarer Befestigungselemente aneinander festlegbar sind. Eine solche Butterdose oder Käseglocke oder dergleichen dient sowohl zur Aufbewahrung im Kühlschrank als auch zum Servieren. Dass der erfindungsgemäße Zusatzbehälter mit Kühlfach gerade bei letzterem große Vorteile bietet und die Butter bzw. die auf der Platte angerichteten Lebensmittel während der Mahlzeit kühlt, liegt auf der Hand. Durch die leichte Ansetzbarkeit des Zusatzbehälters an den Grundkörper ist es auch möglich, den Zusatzbehälter im Gefrierfach des Kühlschranks vorzuhalten und nur dann an die Grundplatte anzusetzen, wenn beispielsweise ein Frühstück im Freien oder ein Brunch vorgesehen sind, bei dem es höchst wünschenswert ist, die auf der Platte angerichteten Lebensmittel gekühlt zu halten.

Um die Handhabbarkeit eines solchen mit einem plattenförmigen Grundkörper und einem haubenförmigen Deckel bestehenden Behälters zu optimieren, kann der Zusatzbehälter mit Griffplatten versehen sein. In entsprechender Weise wird die Einheitlichkeit und Handhabbarkeit des erfindungsgemäßen Behälters mit Zusatzfach dadurch optimiert, dass der Grundkörper unten mit einem umlaufenden Stellrand versehen ist und der Zusatzbehälter einen in den Stellrand eintauchenden Führungsrand, der nicht umlaufend sein muss, mit einem Anschlag für den Stellrand aufweist. Dieser Anschlag kann insbesondere durch die eben erwähnten Griffplatten gebildet werden.

Ein Ausführungsbeispiel der vorliegenden Erfindung wird im folgenden an Hand der beigefügten Zeichnungen näher beschrieben und erläutert. Es zeigen:
- Figur 1: Eine perspektivische Ansicht eines Ausführungsbeispiels in Einzelteilen;
- Figur 2: Eine perspektivische Ansicht des Zusatzbehälters aus Figur 1;
- Figur 3: Eine perspektivische Ansicht wie Figur 2 , jedoch mit eingelegtem Kühlelement;
- Figur 4: Eine perspektivische Ansicht des Grundkörpers und des Zusatzbehälters aus Figur 1 .

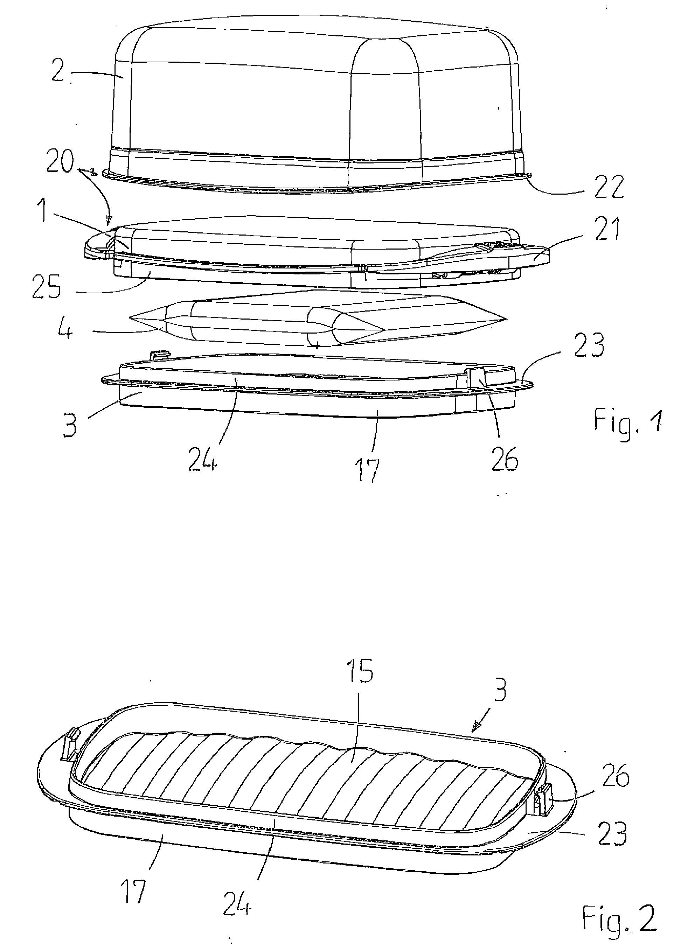

In Figur 1 ist ein Ausführungsbeispiel eines erfindungsgemäßen Behälters in Einzelteilen perspektivisch dargestellt. Der Grundkörper 1 ist hier als Servierplatte ausgebildet, auf den ein als Abdeckhaube ausgebildeter Deckel 2 aufgesetzt werden kann. Der unten an dem Grundkörper 1 ansetzbare Zusatzbehälter 3 enthält ein als Gelbeutel ausgebildetes Kühlelement 4. Der dargestellte Behälter dient als Butterdose zum Aufbewahren und Servieren. Stirnseitig sind Befestigungselemente 20 vorgesehen, die den Deckel 2 auf dem Grundkörper 1 einrastend lösbar befestigen. Es handelt sich um eine elastische Wippe 21, die einen umlaufenden Kragen 22 am Deckel 2 hintergreift und über eine mittels Druck von oben hervorgerufene Schwenkbewegung lösbar ist.

Wie auch in Figur 2 , einer perspektivischen Darstellung des Zusatzbehälters 3, zu sehen ist, ist der Zusatzbehälter 3 dieses Ausführungsbeispiels mit stirnseitigen Griffplatten 23 sowie mit einem umlaufenden Führungsrand 24 versehen, welcher in einen umlaufenden Stellrand 25 des Grundkörpers 1 eintaucht. Die Griffplatten 23 dienen dann gleichzeitig als Anschlag für den Stellrand 25.

Zur Befestigung des Zusatzbehälters 3 am Grundkörper 1 ist der Zusatzbehälter, wie in den Figuren 1 und 2 deutlich zu sehen, stirnseitig mit elastisch einschnappenden Hakenelementen 26 versehen, welche jeweils einen am Grundkörper 1 vorgesehenen Vorsprung hintergreifen, um den Zusatzbehälter 3 am Grundkörper 1 zu befestigen.

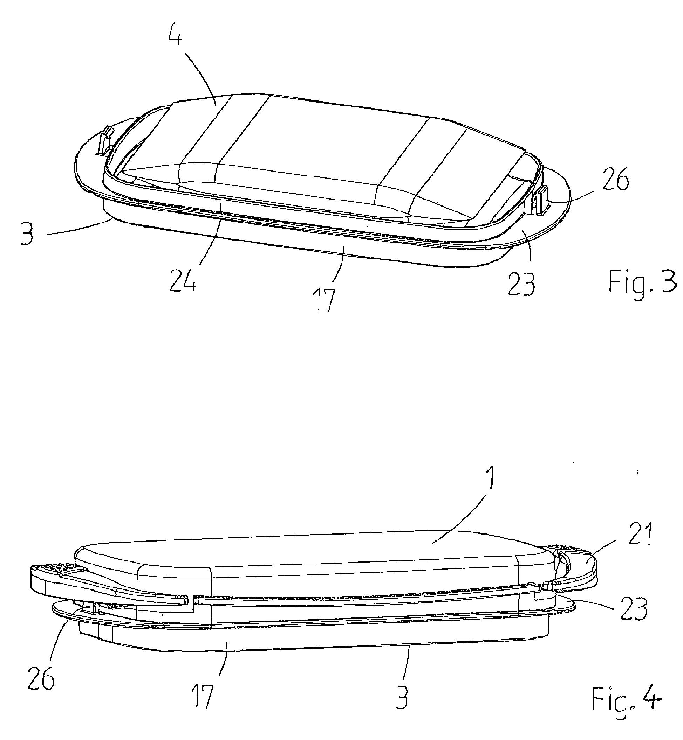

Auf den in Figur 2 dargestellten, aus Wärmeleitungsgründen gewellten Boden 15 des Zusatzbehälters 3 wird, wie Figur 3 zeigt, ein als Gelbeutel ausgestaltetes Kühlelement 4 aufgelegt. Dieses erhält beim Aufsetzen des Grundkörpers 1 auf den Zusatzbehälter 3 wärmeleitenden Kontakt mit der Unterseite der Servierplatte und kühlt diese hierdurch.

Figur 4 zeigt den plattenförmigen Grundkörper 1 ohne Haube, jedoch mit angesetztem Zusatzbehälter 3, um die leicht zu ergreifende Einheit, die insbesondere auch durch die Griffplatten 23 und das Ineinander-Eintauchen der beiden Teile erzeugt wird, zu verdeutlichen. Wie in dieser Darstellung zu sehen ist, sind die Hakenelemente 26 so angeordnet, dass sie die Betätigung der Wippe 21 nicht stören.

Abschließend darf angemerkt werden, dass der Verwendungszweck des erfindungsgemäßen Behälters nicht auf die Aufbewahrung und den Transport bzw. das Servieren von Lebensmitteln beschränkt ist; es sind selbstverständlich auch andere Einsatzzwecke denkbar und von der Erfindung umfasst, bei denen der Inhalt des Behälters gekühlt, oder umgekehrt warm gehalten werden soll.

## Patentansprüche

1. Behälter aus Kunststoff, insbesondere für Lebensmittel, mit einem plattenförmig ausgebildeten Grundkörper (1), einem Deckel (2) sowie einem am Grundkörper (1) angeordneten Zusatzfach mit einem darin enthaltenen Kühlelement (4), wobei das Zusatzfach unter dem Boden (5) des Grundkörpers (1) angeordnet ist und aus einem separaten, wannenförmigen Zusatzbehälter (3) mit eingelegtem Kühlelement (4) besteht, der, mittels am Grundkörper (1) angeordneten, als Vorsprung ausgestalteten Rastelementen (11) und mittels am Zusatzbehälter (3) angeordneten, die Vorsprünge hintergreifenden Hakenelementen (26) lösbar am Grundkörper (1) befestigt ist,
**dadurch gekennzeichnet,**
**dass** der Deckel (2) als Haube ausgebildet ist, dass der Grundkörper (1) unten mit einem umlaufenden Stellrand (25) versehen ist und dass der Zusatzbehälter (3) einen in den Stellrand (25) eintauchenden Führungsrand (24) mit einem Anschlag (23) für den Stellrand (25) aufweist.

2. Behälter nach Anspruch 1,
**dadurch gekennzeichnet,**
**dass** der Grundkörper (1) und der Deckel (2) mittels lösbarer Befestigungselemente (20) aneinander festlegbar sind.

3. Behälter nach einem der Ansprüche 1 oder 2,
**dadurch gekennzeichnet,**
**dass** der Zusatzbehälter (3) mit Griffplatten (23) versehen ist.

4. Behälter nach einem der Ansprüche 1 bis 3,
**dadurch gekennzeichnet,**
**dass** das Kühlelement (4) aus dem Zusatzbehälter (3) entnehmbar ist.

5. Behälter nach Anspruch 4,
**dadurch gekennzeichnet,**
**dass** das Kühlelement (4) ein Gelkissen ist.

6. Behälter nach einem der Ansprüche 4 oder 5,
**dadurch gekennzeichnet,**
**dass** der Zusatzbehälter (3) mit einer dergestalt strukturierten Bodenfläche (15) versehen ist, dass das Kühlelement (4) nicht flächig auf der Bodenfläche (15) aufliegt.

7. Behälter nach einem der Ansprüche 1 bis 6,
**dadurch gekennzeichnet,**
**dass** der Zusatzbehälter (3) an seiner Unterseite mit Fußelementen oder einem umlaufenden Steg (17) versehen ist.

## Claims

1. A container of plastic material, particularly for foodstuffs, with a plate-shaped base body (1), a cover (2) and an additional compartment arranged on the base body (1) with a cooling element (4) contained therein, wherein the additional compartment is arranged beneath the base (5) of the base body (1) and consists of a separate, tray-shaped additional container (3) with an inserted cooling element (4), which is releasably fastened to the base body (1) by means of locking elements (11), which are arranged on the base body (1) and are constructed as projections, and by means of hook elements (26), which are arranged on the additional container (3) and engage behind the projections, **characterised in that** the cover (2) is constructed in the form of a hood, that the base body (1) is provided at the bottom with a peripheral positioning edge and that the additional container (3) has a guide edge (24), which extends into the positioning edge (25), with an abutment (23) for the positioning edge (25).

2. A container as claimed in claim 1, **characterised in that** the base body (1) and the cover (2) are fixable to one another by means of releasable fastening elements (20).

3. A container as claimed in one of claims 1 or 2, **characterised in that** the additional container (3) is provided with gripping plates (23).

4. A container as claimed in one of claims 1 to 3, **characterised in that** the cooling element (4) is removable from the additional container (3).

5. A container as claimed in claim 4, **characterised in that** the cooling element is a gel cushion.

6. A container as claimed in one of claims 4 or 5, **characterised in that** he additional container (3) is provided with a base surface which is structured so that the cooling element (4) does not rest flatly on the base surface (15).

7. A container as claimed in one of claims 1 to 6, **characterised in that** the additional container (3) is provided on its underside with foot elements or a peripheral web (17).

## Revendications

1. Récipient en matière plastique, en particulier pour produits alimentaires, avec un corps de base (1) réalisé en forme de plaque, avec un couvercle (2) et avec un compartiment auxiliaire disposé sur le corps de base (1) et contenant un élément de refroidissement (4), sachant que le compartiment auxiliaire est disposé sous le fond (5) du corps de base (1) et est constitué d'un récipient auxiliaire séparé (3) en forme de cuvette dans lequel est inséré un élément de refroidissement (4), récipient qui est fixé de manière amovible au corps de base (1) au moyen d'éléments d'enclenchement (11) disposés sur le corps de base (1) et réalisés sous forme de saillies et au moyen d'éléments formant crochets (26) disposés sur le récipient auxiliaire (3) et s'engageant derrière les saillies,
**caractérisé en ce que** le couvercle (2) est réalisé sous forme de cloche, **en ce que** le corps de base (1) est pourvu sur le dessous d'un bord de positionnement entourant (25) et **en ce que** le récipient auxiliaire (3) présente un bord de guidage (24) s'enfonçant dans le bord de positionnement (25) et pourvu d'une butée (23) pour le bord de positionnement (25).

2. Récipient selon la revendication 1, **caractérisé en ce que** le corps de base (1) et le couvercle (2) peuvent être fixés l'un à l'autre au moyen d'éléments de fixation amovibles (20).

3. Récipient selon la revendication 1 ou 2, **caractérisé en ce que** le récipient auxiliaire (3) est pourvu de poignées plates (23).

4. Récipient selon l'une des revendications 1 à 3, **caractérisé en ce que** l'élément de refroidissement (4) peut être retiré du récipient auxiliaire (3).

5. Récipient selon la revendication 4, **caractérisé en ce que** l'élément de refroidissement (4) est un coussin de gel.

6. Récipient selon l'une des revendications 4 ou 5, **caractérisé en ce que** le récipient auxiliaire (3) est pourvu d'une surface de fond (15) structurée de telle sorte que l'élément de refroidissement (4) ne repose pas à plat sur la surface de fond (15).

7. Récipient selon l'une des revendications 1 à 6, **caractérisé en ce que** le récipient auxiliaire (3) est pourvu sur son côté inférieur d'éléments formant pieds ou d'une saillie entourante (17).
